# EUROPÄISCHE PATENTANMELDUNG

(11) **EP 1 890 169 A1**
(43) Veröffentlichungstag der Anmeldung: **20.02.2008**
(21) Anmeldenummer: 07015134.5
(22) Anmeldetag: 02.08.2007
(51) Int. Cl.: G01V 3/08, G01V 8/10

(54) **Messvorrichtung zur Detektion von Produktstreifen auf einem Flächengebilde**

(30) Priorität: 16.08.2006 DE 102006038436
(71) Anmelder: Andritz Küsters GmbH & Co. KG, 47805 Krefeld (DE)
(72) Erfinder: Lohr, Kerstin, 50733 Köln (DE); Piechowiak, Andreas, 47839 Krefeld (DE); Funger, Bernhard, 47839 Krefeld (DE)
(74) Vertreter: Kluin, Jörg-Eden

(57) **Zusammenfassung**

Die Messvorrichtung zur Detektion von Produktstreifen (1) auf einem insbesondere papier- oder textilhaltigem Flächengebilde (2) umfasst optische, magnetische oder elektrische Eigenschaften des Flächengebildes (2) erfassenden Sensor (3), der die erfasste Eigenschaft in ein Messsignal umwandelt, eine Einrichtung zur Festlegung eines Signalschwellenwertes und eine Signaleinrichtung, die ein optisches und/oder akustisches Signal abgibt, wenn eine Änderung des Messsignals über den Schwellenwert hinweg erfolgt. Mit dieser Messvorrichtung lassen sich Streifenpositionen und -breiten von auf das Flächengebilde (2) aufgebrachter Streifen (1), die für das menschliche Auge nicht sichtbar sind, erfassen.

## Beschreibung

Die Erfindung betrifft eine Messvorrichtung zur Detektion von Produktstreifen auf einem Flächengebilde.

Unter Flächengebilde sollen insbesondere papier- oder textilhaltige Flächengebilde verstanden werden. Zu den textilhaltigen Flächengebilden gehören auch Vlieslagen, die bei Hygieneartikeln Verwendung finden. Derartige Vlieslagen weisen oft Streifen eines auf die Vlieslage in flüssiger Form aufgebrachten Produkts auf, deren Lagen nach dem Trocknen mit bloßem Auge nicht erkennbar sind. Beispielhaft seien Windeln genannt, deren Vlieslagen in dem Bereich, in dem das Auftreffen von Körperflüssigkeit zu erwarten ist, mit einem Streifen eines Nässe resorbierenden Produkts versehen sind, um einen Abtransport der Körperflüssigkeit von der Oberfläche der Vlieslage zu einer tieferen, die Körperflüssigkeit aufnehmenden Lage zu bewerkstelligen.

Da ein großer Bedarf an derartig ausgerüsteten Vlieslagen besteht, erfolgt in der industriellen Fertigung eine zeitgleiche Applikation mehrerer über die Breite einer vorlaufenden Vliesbahn verteilter Streifen des Produkts. Nach dem Auftrag und gegebenenfalls weiteren Schritten zu Fixierung, Eintrockung, etc. des Produkts auf der Vliesbahn erfolgt eine Längsteilung letzterer mittels geeigneter Scheideinrichtungen (beispielsweise Rollenschneider) in Streifen, deren Breite derjenigen der benötigten Vlieslage entspricht.

Für eine fehlerfreie Produktion ist es erforderlich, sowohl die Breite der Streifen als auch deren Position auf der Vliesbahn zu kennen, um eine Applikationseinrichtung, wie Sie beispielsweise auch aus der DE 32 09 456 A1 bekannt ist, im Sinne der gewünschten Streifenbreite steuern und die Vlieslage an den richtigen Stellen in einzelne Längsstreifen zerschneiden zu können. Besonders erschwert ist diese Steuerung bei Vliesbahnen, bei denen sich die Breite und/oder Lage des aufgebrachten Streifens bei sich anschließenden Verfahrensschritten ändert.

Für den Fall, dass das Produkt - wie überwiegend - in wässriger Lösung aufgebracht wird, ist ein nachgeschalteter Trocknungsschritt erforderlich, bei welchem die Vliesbahn regelmäßig schrumpft und sich somit die Position und die Breite der Streifen verändert. Es ist daher zur Erzielung eines optimalen Produktionsergebnisses erforderlich, die Streifenbreite und -lage nach vollständigem Abschluss des Auftrags und der beispielsweise durch Trocknung erfolgenden Fixierung der Streifen festzustellen. Dies geschieht derzeit dadurch, dass in einem Probelauf zunächst ein streifenförmiger Auftrag des Produkts nach Erfahrungswerten durchgeführt wird und anschließend durch manuelle Benetzung der mit dem Streifen versehenen Vliesbahn die Streifenlagen und -breiten erfasst werden. Nach den so ermittelten Streifenpositionen und -breiten werden die Auftragseinrichtung und die Schneideinrichtung im Sinne der Erzielung der gewünschten Streifenbreiten und der Lage der Streifen auf den Vlieslagen eingestellt.

Nachteilig ist bei diesem Verfahren, dass aufwändige Laborversuche zur Bestimmung der Streifenlagen und -breiten notwendig sind, die ausschließlich an einer stillstehenden Vliesbahn möglich sind. Darüber hinaus sind die Bereiche der Vliesbahn (allgemeiner: des Flächengebildes), an denen die Laborversuche zur Ermittlung der Streifenlagen und -breiten durchgeführt wurden, für eine spätere Verwendung unbrauchbar. Hierdurch ist die Produktivität reduziert und es entstehen Produktionsabfälle, die entsorgt werden müssen, wodurch Zusatzkosten entstehen.

Der Erfindung liegt daher die Aufgabe zugrunde eine Messvorrichtung zu schaffen, mittels welcher mit dem menschlichen Auge nicht wahrnehmbare Produktstreifen auf einem Flächengebilde, insbesondere einem papier- oder textilhaltigem Flächengebilde, detektiert werden können.

Diese Aufgabe wird durch die in Anspruch 1 wiedergegebene Messvorrichtung gelöst.

Sie umfasst einen optische, magnetische oder elektrische Eigenschaften des Flächengebildes erfassenden Sensor, der die erfasste Eigenschaft in ein Messsignal umwandelt. Die erfindungsgemäße Messvorrichtung macht sich zunutze, dass eine oder mehrere der genannten Eigenschaften des textilhaltigen Flächengebildes in den Bereichen, in denen der mit bloßen Auge nicht wahrnehmbare Produktauftrag erfolgt ist, signifikant andere Werte aufweisen, als in den Bereichen, in denen das Produkt nicht aufgetragen worden ist. Sollen optische Eigenschaften des Flächengebildes gemessen werden, so umfasst die Messvorrichtung beispielsweise einen CCD Chip, mittels welchem beispielsweise die Intensität einer von einer Oberfläche des Flächengebildes reflektierten elektromagnetischen Strahlung, die nicht zwingend im Sichtbaren liegen muss, erfasst wird. Hierzu kann die Beleuchtung der Oberfläche des Flächengebildes durch eine Lichtquelle, die elektromagnetische Strahlung der gewünschten Wellenlänge abgibt, erfolgen. Sie kann in die Messvorrichtung integriert sein. Ebenso können die magnetischen Eigenschaften des Flächengebildes gemessen werden, wenn die Messvorrichtung eine Spulenanordnung umfasst, deren Induktivität zur Erzeugung des Messsignals Verwendung findet, wenn das Flächengebilde von magnetischen Feldlinien, die von einer Spulenanordnung erzeugt werden, durchsetzt wird. Insbesondere umfasst die erfindungsgemäße Messvorrichtung jedoch einen die elektrische Eigenschaften des Flächengebildes erfassenden Sensor, wofür der Bereich des Flächengebildes, dessen elektrische Eigenschaften gemessen werden sollen, vorzugsweise in ein elektrisches Feld gebracht wird.

Ferner umfasst die erfindungsgemäße Vorrichtung eine Einrichtung zur Festlegung eines Signalschwellenwertes sowie eine Signaleinrichtung, die ein optisches und/oder akustisches Signal abgibt, wenn eine Änderung des Messsignals über den Schwellenwert hinweg erfolgt.

Um nun die Streifenlagen und -breiten erfassen zu können, wird die erfindungsgemäße Messvorrichtung über das Flächengebilde hinwegbewegt. Der Signalschwellenwert wird vorab so eingestellt, dass das bei einem Flächengebilde, auf das kein Produkt aufgebracht worden ist, erwartete Signal auf der einen Seite des Schwellenwertes, das nach der Beaufschlagung mit dem Produkt zu erwartende Messsignal auf der anderen Seite des Schwellenwertes liegt. Der Übergang des Messsignals von der einen zu der anderen Seite des Schwellenwertes wird dann optisch und/oder akustisch mittels der Signaleinrichtung angezeigt, wodurch die Position des Randes eines Streifens festlegbar ist.

Die Messanordnung kann - wie bevorzugt - einen kapazitiv arbeitenden Sensor umfassen. Dieser weist dann - besonders bevorzugt - eine Plattenkondensator-Anordnung auf, die derart angeordnet ist, dass der Bereich, in dem die Eigenschaft des Flächengebildes erfasst werden soll, von elektrischen Feldlinien, die von der Plattenkondensatoranordnung erzeugt werden, durchsetzt wird.

Insbesondere kommt hierfür ein offener Plattenkondensator in Betracht, dessen Platten etwa in einer Ebene nebeneinander derart angeordnet sind, dass sich beide Platten während der Messung auf einer Seite des Flächengebildes befinden.

Umfasst die Messvorrichtung einen kapazitiv arbeitenden Sensor, so wird dieser vorzugsweise nach einem Verfahren betrieben, wie es sich für sich genommen bereits aus der DE 41 00 869 A1 bekannt ist.

Um die Streifenpositionen und -breiten beim Überstreichen des Flächengebildes durch Bedienpersonal auf einfache Weise erfassen zu können, umfasst die Signaleinrichtung der erfindungsgemäßen Messvorrichtung vorzugsweise ein Leuchtmittel und/oder einen Lautsprecher. Die Position des Randes eines Streifens kann dann in Abhängigkeit der mittels der Messvorrichtung erzielten Ortsauflösung, die von der Größe des für die Eigenschaftserfassung verwendeten Bereichs des Flächengebildes abhängt, erfasst werden, indem im einfachsten Falle das Bedienpersonal die Stelle auf dem Flächengebilde optisch markiert, an welcher das Signal erscheint.

Besonders bevorzugt ist eine Weiterbildung der erfindungsgemäßen Messvorrichtung, bei welcher dieser ein Display zur Wiedergabe des Schwellenwertes und des Signals umfasst. Aufgrund dieser Weiterbildung stehen dem Bedienpersonal zunächst Information über den aktuell eingestellten Schwellenwert zur Verfügung, was die Wahrscheinlichkeit von Fehlmessungen aufgrund eines falsch eingestellten Schwellenwertes reduziert. Zum anderen können aufgrund der von dem Display ablesbaren Größe des Messsignals Rückschlüsse auf die Flächenbelegung, d.h. über die Menge des pro Fläche aufgetragenen Produktes getroffen werden, sofern die Messvorrichtung anhand von Proben mit definierter Flächenbelegung vorab kalibriert worden ist.

Bei einer ersten, besonders bevorzugten Ausführungsform, umfasst die Messvorrichtung eine eigene interne Energieversorgung, was sie insbesondere für einen Einsatz als mobiles Handgerät geeignet macht.

Eine weitere besonders bevorzugte Ausführungsform der Messvorrichtung umfasst einen Signalausgang zum Anschluss an eine externe Datenverarbeitungsanlage, mittels welcher die an dem Signalausgang anstehenden Messsignale gespeichert und beispielsweise in Flächenbelegungswerte umgerechnet werden können. Insbesondere dann, wenn die Messvorrichtung an eine externe Datenverarbeitungsanlage anschließbar sein soll, ist es bevorzugt, wenn sie des weiteren einen Anschluss für eine externe Energieversorgung umfasst, da sich hierdurch die Messvorrichtung aufgrund der Einsparung der internen Energieversorgung durch einen besonders geringen Platzbedarf auszeichnet und somit der Einsatz auch bei beengten Platzverhältnissen erleichtert ist.

Die Messvorrichtung kann auch einfache Weise in bestehende Systeme integriert werden, wenn die Anschlüsse für den Signalausgang und die Energieversorgung nach USB-Standard ausgebildet sind.

Bei einem ersten Anwendungsbereich, für den die erfindungsgemäße Messvorrichtung geeignet sein soll, ist diese als mobiles Handgerät ausgestaltet. Dieses ist dann insbesondere geeignet, um die Streifenpositionen und -breiten auf einem auch stillstehenden Flächengebilde zu erfassen, indem die Messvorrichtung manuell über das Flächengebilde geführt wird und diejenigen Stellen des Flächengebildes markiert werden, bei welchen mittels der Signaleinrichtung das optische und/oder akustische Signal abgegeben wird.

Um jedoch die erfindungsgemäße Messvorrichtung in einen Produktionsablauf, bei welchem das Flächengebilde kontinuierlich vorläuft, integrieren zu können, ist sie vorzugsweise derart ausgestaltet, dass sie mit einem Wegmesssystem koppelbar ist. Mittels dieses Wegmesssystems werden dann die Messsignale dem jeweiligen Ort des Sensors in Bezug auf das Flächengebilde zugeordnet.

Das Wegmesssystem kann insbesondere eine Einrichtung umfassen, mittels welcher der Sensor quer zur Längsausdehnung der Streifen über das Flächengebilde verlagerbar ist. Beispielsweise kann die Einrichtung einen Spindelantrieb erfassen, mittels welchem der Sensor über das Flächengebilde verlagerbar ist. Das von dem Sensor erfasste Messsignal kann dann auf einfache Weise einer Position zugeordnet werden, wenn der Antrieb der Spindel einen Schrittmotor umfasst, der von einer Datenverarbeitungsanlage gesteuert wird, so dass die Position des Sensors durch die vollzogenen Schritte festgelegt ist.

Zwecks Positionsbestimmung kann jedoch das Wegmesssystem auch einen separaten Wegaufnehmer mit einem Positionssignalausgang aufweisen, an welchem ein sensorpositionsabhängiges Signal ansteht. Der Positionssignalausgang ist dann - besonders bevorzugt - mit der Datenverarbeitungsanlage zwecks Korrelation der erfassten Messsignale mit der jeweiligen Sensorposition verbunden.

In der Zeichnung sind Ausführungsbeispiele der erfindungsgemäßen Messvorrichtung dargestellt. Es zeigen:
- Fig. 1: - schematisch - ein erstes Ausführungsbeispiel einer Messvorrichtung, die als mobiles Handgerät ausgestaltet ist in einer Ansicht von oben auf ein Flächengebilde;
- Fig. 2: - schematisch - ein weiteres Ausführungsbeispiel der erfindungsgemäßen Messvorrichtung, bei dem diese ein Wegmesssystem umfasst in einer Fig. 1 entsprechenden Ansicht sowie
- Fig. 3: die Messvorrichtung gemäß Fig. 2 - wiederum schematisch - in einer Ansicht gemäß Fig. 2 von links.

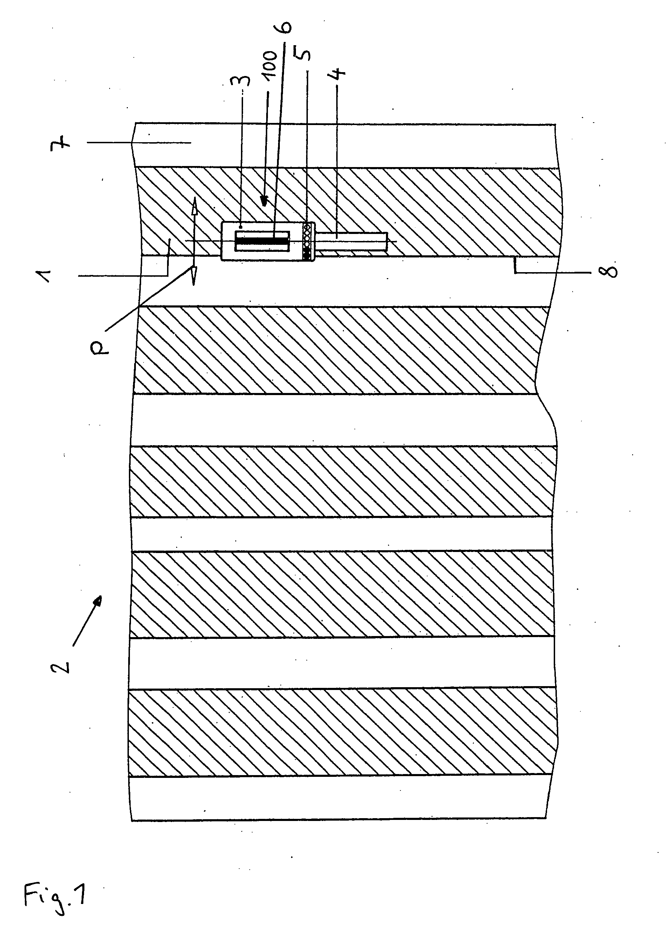

Die in Fig. 1 als Ganzes mit 100 bezeichnete Messvorrichtung dient der Detektion von Produktstreifen 1 auf einem Flächengebilde 2. Bei den Produktstreifen 1 kann es sich insbesondere um Streifen eines Produktes handeln, das in flüssiger Form auf das Flächengebilde 2 aufgebracht worden ist und mit bloßem Auge nicht erkannt werden kann. Handelt es sich bei dem Flächengebilde beispielsweise um eine Vlieslage, die bei Hygieneartikeln, beispielsweise bei Windeln, Verwendung finden soll, so können die Produktstreifen einen Stoff umfassen, der der Vlieslage Nässe resorbierende Wirkung verleiht.

Die Messvorrichtung 100 umfasst ein Gehäuse 3, welches mit einer Handhabe 4 versehen ist.

In den Gehäuse 3 ist ein Sensor vorgesehen, der Eigenschaften des Flächengebildes, die von dem Produktstreifen 1 beeinflusst werden, erfasst und in ein Messsignal umgewandelt.

Bei den in der Zeichnung dargestellten Ausführungsbeispielen der Messvorrichtung ist der Sensor als kapazitiv arbeitender Sensor ausgebildet. Er umfasst eine in der Zeichnung nicht erkennbare Plattenkondensator-Anordnung, die derart ausgestaltet ist, dass sich in der Messposition der Messvorrichtung 100 die sich in Anlage mit dem Flächengebilde oder dicht oberhalb desselben befindet, das mittels der Plattenkondensator-Anordnung erzeuge elektrische Feld einen Bereich des Flächengebildes 2 durchsetzt.

Die Plattenkondensator-Anordnung wird mittels einer elektronischen Schaltung in einer Weise betrieben, die für sich genommen aus der DE 41 00 869 A1 bekannt ist und auf welche diesbezüglich verwiesen wird.

Ferner umfasst die Messvorrichtung 100 eine Einrichtung zur Festlegung eines Signalschwellenwertes und eine Signaleinrichtung 5, die ein optisches und/oder akustisches Signal abgibt, wenn eine Änderung des Messsignals über den Schwellenwert hinweg erfolgt.

Ferner ist dem Gehäuse ein Display 6 untergebracht, welches den Schwellenwert sowie das aktuell erfasste Messsignal anzeigt.

Darüber hinaus verfügt die Messvorrichtung 100 über eine in der Zeichnung nicht erkennbare interne Energieversorgung, die beispielsweise in Form von Batterien oder wiederaufladbaren Akkus in der Handhabe 4 untergebracht sein kann.

Zur Ermittlung der Streifenpositionen und -breiten wird nun die erfindungsgemäße Messvorrichtung 100 vom Bedienpersonal manuell quer zur Längserstreckung der Produktstreifen 1 über das Flächengebilde 2 verlagert, wie dies durch den Doppelpfeil P symbolisiert sein soll. Um reproduzierbare Ergebnisse zu erhalten, erfolgt die manuelle Verlagerung der Messvorrichtung 100 in Anlage mit dem Flächengebilde 2.

Beim Übergang vom einen streifenlosen Bereich 7 zu einem mit einem Produktstreifen 1 versehenen Bereich ändern sich die kapazitiven Eigenschaften des von dem elektrischen Feld der Plattenkondensator- Anordnung der Messvorrichtung 100 durchsetzten Bereichs des Flächengebildes 2. Der Schwellenwert ist nach vor der Messung durchgeführten Laborversuchen so eingestellt, dass das mittels des Sensors erzeugte Messsignal in streifenlosen Bereichen einerseits des Schwellenwertes, im mit Produktstreifen versehenen Bereichen anderseits des Schwellenwertes liegt.

Beim Überstreichen eines Streifenrandes findet nun ein Übergang des Messsignals von der einen zur anderen Seite des Schwellenwertes statt, der die Signaleinrichtung 5 aktiviert. Die Position des soeben überstrichenen Streifenrandes 8 kann somit vom Bedienpersonal markiert werden.

Die vorbeschriebene Ausführungsform der Messvorrichtung 100 zeichnet sich insbesondere dadurch aus, dass mit ihr losgelöst von einer Produktionseinrichtung die Streifenpositionen und -breiten der Produktstreifen 1 ermittelt werden können. Sie eignet sich insbesondere zur stichprobenartigen Messung an stillstehenden Flächengebilden 2.

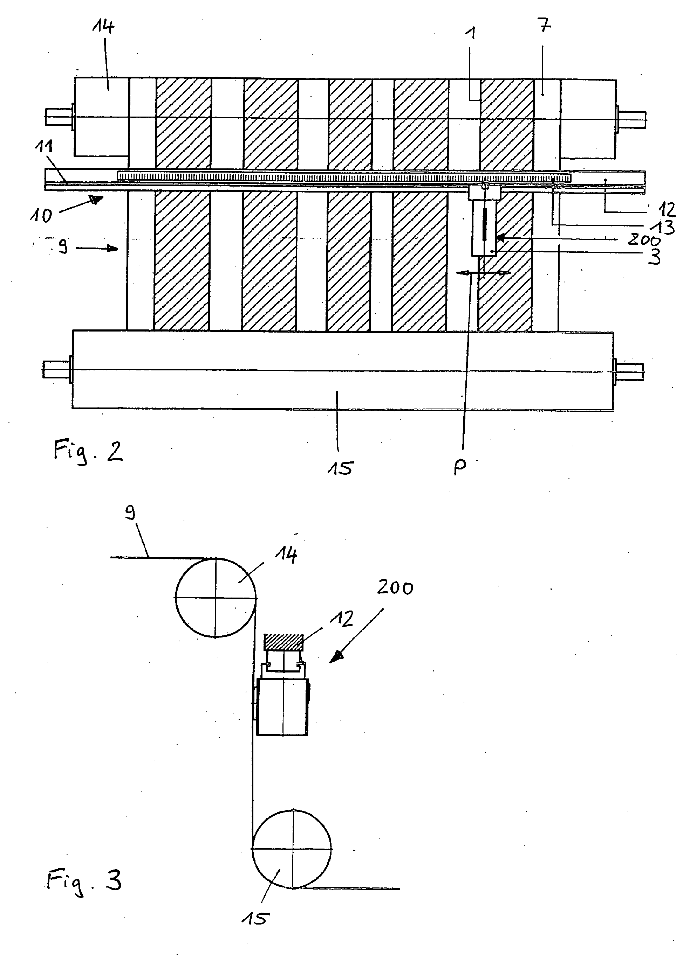

Die in den Fig. 2 und 3 dargestellte weitere Ausführungsform der Messvorrichtung 200 ist hingegen vorgesehen, um insbesondere bei einem kontinuierlich vorlaufenden Flächengebilde - einer Warenbahn 9 - die Streifenlagen und - breiten der Produktstreifen 1 zu erfassen.

Hierzu ist die nach demselben Messprinzip wie die Messvorrichtung 100 arbeitende Messvorrichtung 200 mit einem Wegmesssystem 10 gekoppelt. Dieses umfasst eine mit dem Gehäuse 3 der Messvorrichtung 200 zusammenwirkende Spindel 11, und eine das Gehäuse 3 führende Schienenanordnung 12, so dass das Gehäuse 3 quer zur Längserstreckung der Produktstreifen 1 im Sinne des Doppelpfeiles P durch Drehbetätigung der Spindel 11 über die gesamte Breite der Warenbahn 9 verlagerbar ist. Die Streifenpositionen und/oder -breiten können nun erfasst werden, indem das Messsignal der Messvorrichtung 200 mit einer an der Schienenanordnung 12 vorgesehenen Skalierung 13 korreliert wird. Ferner ist es möglich, das Messsignal einer in der Zeichnung nicht dargestellten Datenverarbeitungsanlage zuzuleiten, welche auch einen zur Drehbetätigung der Spindel 11 vorgesehenen, in der Zeichnung ebenfalls nicht erkennbaren Schrittmotor ansteuert und so die Messsignale Positionen des Gehäuses 3 zuordnen kann.

Die Anordnung der Messvorrichtung 200 erfolgt - wie insbesondere Fig. 3 entnehmbar ist - vorzugsweise in einem Bereich, in dem die vorlaufende Warenbahn zu einer Ebene gespannt ist, was durch der Messvorrichtung 200 vor- und nachgeschaltete, die Warenbahnen spannende, angetriebene Umlenkwalzen 14, 15 erfolgen kann.

### Bezugszeichenliste:

- 100, 200: Messvorrichtung
- 1: Produktstreifen
- 2: Flächengebilde
- 3: Gehäuse
- 4: Handhabe
- 5: Signaleinrichtung
- 6: Display
- 7: streifenloser Bereich
- 8: Streifenrand
- 9: Warenbahn
- 10: Wegmesssystem
- 11: Spindel
- 12: Schienenanordnung
- 13: Skalierung
- 14: Umlenkwalze
- 15: Umlenkwalze
- P: Doppelpfeil

## Patentansprüche

1. Messvorrichtung (100, 200) zur Detektion von Produktstreifen (1) auf einem insbesondere papier- oder textilhaltigem Flächengebilde
mit einem optische, magnetische oder elektrische Eigenschaften des Flächengebildes (2) erfassenden Sensor, der die erfasste Eigenschaft in ein Messsignal umwandelt,
mit einer Einrichtung zur Festlegung eines Signalschwellenwertes,
und mit einer Signaleinrichtung (5), die ein optisches und/oder akustisches Signal abgibt, wenn eine Änderung des Messsignals über den Schwellenwert hinweg erfolgt.

2. Messvorrichtung nach Anspruch 1,
**dadurch gekennzeichnet,**
**dass** der Sensor ein kapazitiv arbeitender Sensor ist.

3. Messvorrichtung nach Anspruch 2,
**dadurch gekennzeichnet,**
**dass** der Sensor eine Plattenkondensator-Anordnung umfasst.

4. Messanordnung nach Anspruch 3,
**dadurch gekennzeichnet,**
**dass** die Plattenkondensator-Anordnung einen offenen Plattenkondensator umfasst.

5. Messvorrichtung nach einem der Ansprüche 1 bis 4,
**dadurch gekennzeichnet,**
**dass** die Signaleinrichtung (5) ein Leuchtmittel und/oder einen Lautsprecher umfasst.

6. Messvorrichtung nach einem der Ansprüche 1 bis 5,
**dadurch gekennzeichnet,**
**dass** die Messvorrichtung ein Display (6) zur Wiedergabe des Schwellenwertes und des Messsignals umfasst.

7. Messvorrichtung nach einem der Ansprüche 1 bis 6,
**dadurch gekennzeichnet,**
**dass** die Messvorrichtung eine interne Energieversorgung umfasst.

8. Messvorrichtung nach einem der Ansprüche 1 bis 6,
**dadurch gekennzeichnet,**
**dass** die Messvorrichtung einen Anschluss für eine Energieversorgung umfasst.

9. Messvorrichtung nach einem der Ansprüche 1 bis 8,
**dadurch gekennzeichnet,**
**dass** die Messvorrichtung einen Signalausgang zum Anschluss an eine externe Datenverarbeitungsanlage umfasst.

10. Messvorrichtung nach Anspruch 8 und 9,
**dadurch gekennzeichnet,**
**dass** die Messvorrichtung Anschlüsse nach USB-Standard für den Signalausgang und die Energieversorgung umfasst.

11. Messvorrichtung nach einem der Ansprüche 1 bis 10,
**dadurch gekennzeichnet,**
**dass** die Messvorrichtung als mobiles Handgerät ausgestaltet ist.

12. Messvorrichtung nach einem der Ansprüche 1 bis 11,
**dadurch gekennzeichnet,**
**dass** die Messvorrichtung mit einem Wegmesssystem koppelbar ist.

13. Messvorrichtung nach Anspruch 12,
**dadurch gekennzeichnet,**
**dass** das Wegmesssystem (10) eine Einrichtung umfasst, mittels welcher der Sensor quer zur Längsausdehnung der Produktstreifen (1) über das Flächengebilde (2) verlagerbar ist.

14. Messvorrichtung nach Anspruch 12 oder 13,
**dadurch gekennzeichnet,**
**dass** das Wegmesssystem (10) einen Positionssignalausgang umfasst, an welchem ein sensorpositionsabhängiges Signal ansteht.

15. Messvorrichtung nach Anspruch 14,
**dadurch gekennzeichnet,**
**dass** der Positionssignalausgang mit der Datenverarbeitungsanlage verbunden ist.
